# DEMANDE DE BREVET EUROPEEN

(11) **EP 0 830 816 A2**
(43) Date de publication de la demande: **25.03.1998**
(21) Numéro de dépôt: 97115133.7
(22) Date de dépôt: 02.09.1997
(51) Int. Cl.: A21C 9/08

(54) **Dispositif pour l'alignement en plusieurs files de morceaux de pâte**

(30) Priorité: 04.09.1996 IT VI960137
(71) Demandeur: COSTRUZIONI MECCHANICHE SOTTORIVA S.p.A., I-36035 Marano Vicentino (Vicenza) (IT)
(72) Inventeur: Sattoriva, Claudio, 36035 Marano Vicentino (Vicenza) (IT)
(74) Mandataire: Bettello, Luigi, Dott. Ing.

(57) **Abrégé**

Il s'agit d'un dispositif apte à permettre le déchargement et l'alignement en plusieurs files des morceaux de pâte sortant d'une machine de fabrication. Il se caractérise en ce qu'il est constitué par un transporteur comprenant une première bande transporteuse (1) entraînée pour défiler toujours dans un même sens et un châssis (2) de support de ladite première bande, animé d'un mouvement rectiligne alternatif et par une seconde bande transporteuse (14) sous-jacente à la première bande (1), entraînée elle aussi pour défiler toujours dans un même sens, qui est perpendiculaire ou oblique par rapport au sens d'avancement de la première bande.

## Description

La présente invention a pour but de réaliser un dispositif apte à aligner parfaitement, sur plusieurs files, une pluralité de morceaux de pâte à pain ou de pâte pour pâtisserie en général, de formes et dimensions variées. Dans le domaine de la panification, en particulier, en constate la nécessité de transporter d'une machine à l'autre les blocs de pâte appelés généralement "pâtons" qui vont constituer les pièces de pain cuit au terme du travail.

Ainsi qu'il est connu, les différentes formes de pâte à pain sont transférées d'une machine à l'autre, par exemple de la machine à découper à la machine à former, à l'aide de transporteurs appropriés.

Au moment où ils sont déchargés de la machine de fabrication, sous l'effet de la gravité, les morceaux individuels se disposent d'une façon quelque peu irrégulière en une file unique sur la bande transporteuse sous-jacente.

En outre, il se produit fréquemment que les blocs de pâte doivent présenter des dispositions différentes de celles qu'ils possèdent en sortant d'une machine de fabrication, lorsqu'ils entrent dans la machine suivante.

A titre d'exemple, les pâtons qui sortent de la machine à découper sont normalement alignés sur une seule file tandis que, pour répondre aux demandes de plus grande productivité, ils doivent au contraire entrer dans la machine suivante, à savoir la machine à former, en étant disposés et alignés en deux ou plus de deux files. Dans l'état actuel de la technique, ceci requiert l'utilisation d'autres dispositifs tels que, par exemple un déflecteur et deux ou plus de deux transporteurs disposés en échelle. Le but de la présente invention consiste à réaliser un dispositif pour le déchargement et l'alignement en plusieurs files des formes de pâte, en particulier pour le secteur de la panification, qui soit simple aussi bien du point de vue de la construction que du point de vue fonctionnel, comparativement à d'autres dispositifs de type connu, et qui soit utilisable pour différents types d'alignement sans exiger de modification ni de remplacement.

Selon l'invention, ceci s'obtient en prévoyant un dispositif constitué par un transporteur comprenant une première bande transporteuse entraînée pour défiler toujours dans un même sens et un châssis de support de ladite première bande, animé d'un mouvement rectiligne alternatif, et par une seconde bande transporteuse, sous-jacente à la première bande, entraînée pour défiler toujours dans un même sens, qui est perpendiculaire ou oblique par rapport au sens d'avancement de ladite première bande.

En outre, la première bande transporteuse, qui est montée sur le transporteur, est du type bande sans fin et elle est toujours en mouvement dans le même sens, tandis que la structure porteuse du transporteur se déplace en mouvement rectiligne alternatif.

En détail, le manchon qui constitue la première bande transporteuse est maintenu tendu et il est contraint à défiler entre au moins deux rouleaux, calés sur la structure porteuse du transporteur et sur au moins trois autres rouleaux, calés sur des plaques latérales fixes qui supportent ladite structure, tous les rouleaux présentant leurs axes parallèles entre eux et perpendiculaires à la direction d'avancement du transporteur, et étant tous fous, sauf au moins un qui joue le rôle d'entraînement pour le manchon précité.

Avec cette solution, lorsque la structure porteuse du transporteur se déplace en un mouvement rectiligne alternatif, les rouleaux calés sur ladite structure de manière à tourner l'un en sens inverse de l'autre se rapprochent et s'éloignent alternativement des rouleaux fixes, calés sur les plaques latérales.

Ceci implique que la première bande transporteuse, du type bande sans fin, modifie continuellement son profil et est contrainte à défiler toujours dans le même sens qui, dans le dispositif selon l'invention correspond au sens qui va de l'intérieur vers l'extérieur de la machine de travail d'où sont déchargés les produits en pâte qu'il s'agit d'aligner sur deux ou plus de deux files. Le déplacement rectiligne alternatif du transporteur peut être réalisé au moyen d'un mécanisme bielle-manivelle qui coopère avantageusement avec l'une des deux parois latérales fixes.

Pour réaliser la disposition sur deux ou plus de deux files des morceaux de pâte qui sortent de la machine, on prévoit un deuxième transporteur dont la bande transporteuse est sous-jacente à la première bande transporteuse et animée d'un seul sens d'avancement, qui est perpendiculaire ou oblique par rapport à la direction d'avancement de ladite première bande.

Fonctionnellement, si l'on règle de façon appropriée la vitesse d'avancement des deux bandes transporteuses, les morceaux de pâte sont déposés par la première bande transporteuse sur la deuxième bande transporteuse en une succession de rangées parallèles qui, juxtaposées, vont constituer la disposition d'alignement sur plusieurs files qu'on veut obtenir.

L'invention a également pour objet un procédé mis en oeuvre au moyen du dispositif décrit ci-dessus, caractérisé en ce que des pâtons, qui proviennent de la machine de fabrication, se déposent sur la première bande transporteuse, qui, animée non seulement du mouvement d'avancement, dépose lesdits pâtons sur la seconde bande sous-jacente, en rangées successives qui viennent constituer la disposition alignée sur plusieurs files.

Ces caractéristiques de l'invention ainsi que d'autres ressortiront plus clairement de la description d'une forme possible de réalisation, donnée uniquement à titre illustratif et non limitatif, à l'aide des planches de dessins annexé sur lesquels :

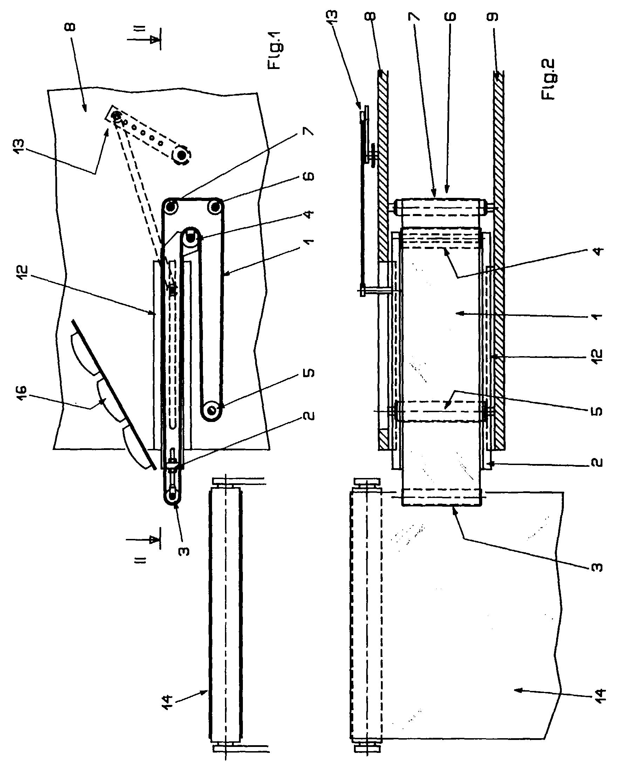

la figure 1 (planche I) représente une vue schématique en élévation du dispositif selon l'invention, en situation de repos ;
la figure 2 représente une vue en plan, en coupe selon la ligne II-II de la figure 1, du dispositif de la figure précitée ;
la figure 3 (planche II) représente une vue schématique en élévation du dispositif selon l'invention, en situation de travail ;
la figure 4 représente une vue en plan, en coupe selon la ligne IV-IV de la figure 3, du dispositif de la figure précité.

Le dispositif selon l'invention comprend un transporteur essentiellement constitué par une première bande transporteuse 1, ainsi que d'un châssis 2 de support de ladite bande, animé d'un mouvement rectiligne alternatif.

La bande 1, qui est du type à profil fermé, est maintenue tendue et peut défiler sur une pluralité de rouleaux (3, 4, 5, 6 et 7) parallèles entre eux et disposés avec leur axe longitudinal perpendiculaire à la direction du mouvement du transporteur.

Les rouleaux 3 et 4 sont supportés aux extrémités du châssis mobile 2 et ils sont disposés de manière que leurs sens de rotation soient inverses l'un de l'autre.

Les rouleaux 5, 6 et 7 sont au contraire supportés par les parois latérales fixes 8 et 9 solidaires de la structure de la machine.

Avec cette disposition, le mouvement rectiligne alternatif, selon les flèches 10, du châssis 2 et des rouleaux 3 et 4, qui sont ancrés à ce châssis, implique une modification continue du profil de la bande 1, laquelle est contrainte à défiler toujours dans le même sens, selon les flèches 11.

Dans son mouvement rectiligne alternatif, le châssis 2 est maintenu guidé par les guides 12 fixés sur les parois latérales 8 et 9, et il est mis en mouvement au moyen d'un mécanisme à bielle-manivelle 13.

Le dispositif selon l'invention est complété par une autre bande transporteuse 14, placée à l'extérieur de la machine, dans une position sous-jacente à la première bande transporteuse 1, et animée elle aussi d'un seul sens d'avancement, selon la flèche 15, qui est perpendiculaire à la direction d'avancement de la bande 1 précitée.

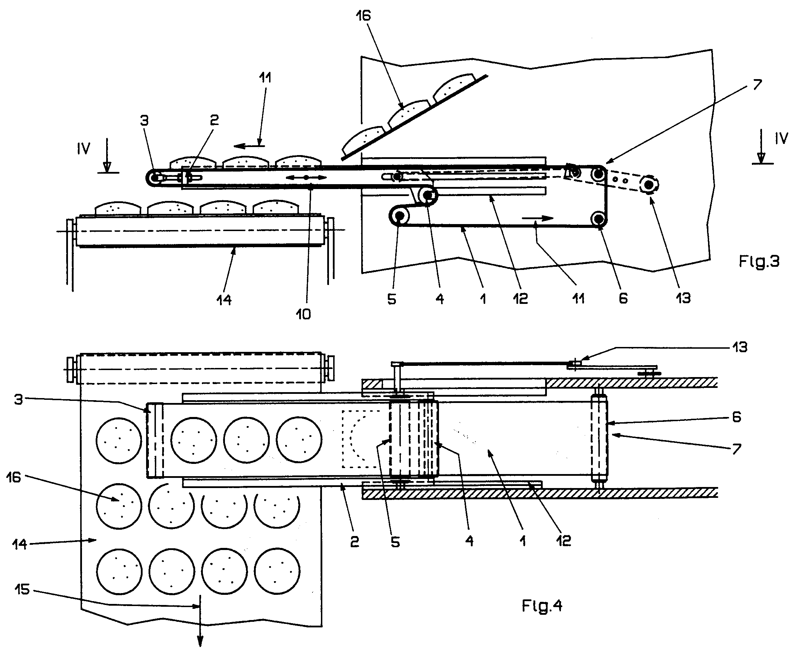

Comme représenté sur la figure 3, les morceaux de pâte ou pâtons 16 viennent se déposer, sensiblement alignés, en une seule file, sur la bande transporteuse 1 qui, ensuite les dépose en continu sur la bande transporteuse 14 sous-jacente.

Il est facile de comprendre qu'en synchronisant entre elle les vitesses d'avancement des deux bandes transporteuses 1 et 14, ainsi que la vitesse du déplacement rectiligne alternatif du châssis 2, on réalise finalement une disposition alignée en plusieurs files des pâtons 16 sur ladite bande 14, comme on peut le voir sur la figure 4.

## Revendications

1. Dispositif pour le déchargement et l'alignement en plusieurs files des morceaux de pâte (16) à la sortie d'une machine de fabrication, caractérisé en ce qu'il est constitué par un transporteur comprenant une première bande transporteuse (1) entraînée pour défiler toujours dans un même sens et un châssis (2) de support de ladite première bande, animé d'un mouvement rectiligne alternatif, et par une seconde bande transporteuse (14), sous-jacente à la première bande (1), entraînée pour défiler toujours dans un même sens, qui est perpendiculaire ou oblique par rapport au sens d'avancement de ladite première bande (1).

2. Dispositif selon la revendication 1, caractérisé en ce que la première bande transporteuse (1) est du type bande sans fin, et qu'elle est maintenue tendue et capable de défiler sur une pluralité de rouleaux (3, 4, 5, 6, 7) dont les axes sont parallèles entre eux et sont disposés perpendiculaires à la direction d'avancement du châssis (2), les rouleaux (3, 4) montés sur ledit châssis (2) étant mobiles, alors que les autres rouleaux (5, 6, 7) sont ancrés aux parois latérales (8, 9) du dispositif, lesdits rouleaux étant fous sur leur axe de rotation, à l'exception d'au moins un qui constitue l'élément moteur d'entraînement de ladite première bande (1).

3. Dispositif selon les revendications 1 et 2, caractérisé en ce que le mouvement rectiligne alternatif du châssis (2), qui peut coulisser dans des guides (12) montés sur les parois latérales, est obtenu au moyen d'un mécanisme à bielle-manivelle.

4. Procédé mis en oeuvre avec le dispositif indiqué dans une ou plusieurs des revendications précédentes, caractérisé en ce que des pâtons (16), qui proviennent de la machine de fabrication, se déposent sur la première bande transporteuse (1) qui, animée non seulement du mouvement d'avancement mais aussi d'un déplacement rectiligne alternatif, dépose lesdits pâtons sur la seconde bande (14) sous-jacente, en rangées successives qui viennent constituer la disposition alignée sur plusieurs files.
